# EUROPÄISCHE PATENTSCHRIFT

(11) **EP 4 298 016 B1**
(45) Veröffentlichungstag und Bekanntmachung des Hinweises auf die Patenterteilung: **19.02.2025**
(21) Anmeldenummer: 22707146.1
(22) Anmeldetag: 22.02.2022
(51) Int. Cl.: B64C 39/02, B64D 5/00, B64D 3/00

(54) **LUFTFAHRZEUG MIT FLÜGEL-KLAPPMECHANISMUS**
AIR VEHICLE WITH WING-FOLDING MECHANISM
VÉHICULE AÉRIEN AVEC MÉCANISME D'AILES REPLIABLES

(30) Priorität: 26.02.2021 DE 102021001038
(43) Veröffentlichungstag der Anmeldung: 03.01.2024
(73) Patentinhaber: Diehl Defence GmbH & Co. KG, 88662 Überlingen (DE)
(72) Erfinder: FISCH, Peter Gerd, 88662 Überlingen (DE); REIS, Patrick, 88662 Überlingen (DE); KORTHALS, Tobias, 78467 Konstanz (DE)
(74) Vertreter: Diehl Patentabteilung
(86) Internationale Anmeldenummer: PCT/EP2022/054387
(87) Internationale Veröffentlichungsnummer: WO 2022/180026

(56) Entgegenhaltungen:
- WO-A2-2018/044182
- CN-A- 109 367 760
- KR-A- 20110 062 088
- US-A1- 2017 260 973
- US-A1- 2017 369 150
- US-A1- 2021 033 371

## Beschreibung

Die Erfindung betrifft ein Luftfahrzeug, insbesondere einen Flugkörper.

Aus der Praxis sind Luftfahrzeuge (LFZ) oder Flugkörper (FK), insbesondere Marschflugkörper, z.B. in Form des "Taurus KEPD-350" mit rechteckigem Rumpf und zwei auf der Oberseite des Rumpfes angeordneten, ausklappbaren Tragflächen oder in Form des "BGM-109 Tomahawk", bekannt.

Um höhere Reichweiten für die Flugkörper zu erzielen, finden dabei Klapp- bzw. Schwenkflügel Verwendung, die in der Packkonfiguration bzw. einem Packzustand vollständig oder teilweise im Rumpf versenkt sind und im Flug bzw. einem Flugzustand ausgeschwenkt werden bzw. sind.

KR 2011 0062088 A offenbart ein Luftfahrzeug.

US 2017/260973 A1 offenbart eine Schwenkanordnung für Flügel eines Luftfahrzeuges.

CN 109 367 760 A offenbart eine Flügelanordnung für ein Luftfahrzeug.

US 2017/369150 A1 offenbart ein unbemanntes Luftfahrzeug.

WO 2018/044182 A2 offenbart ein Prinzip zum Bewegen von Flügeln eines Luftfahrzeuges.

US 2021/0033371A1 offenbart ein Luftfahrzeug mit an einem Rumpf klappbar gelagerten Flügeln.

Aufgabe der Erfindung ist es, ein verbessertes Luftfahrzeug vorzuschlagen.

Die Aufgabe wird gelöst durch ein Luftfahrzeug gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Luftfahrzeug weist eine Längsachse auf, die bei dessen regulärem Betrieb, also beim Flug des Luftfahrzeuges dessen Flugrichtung entspricht. Das Luftfahrzeug enthält zwei Flügel. Jeder der Flügel erstreckt sich entlang einer jeweiligen Flügelachse. Das Luftfahrzeug enthält ein Klapplager, das an der Längsachse angeordnet ist. Insbesondere ist das Klapplager von der Längsachse durchsetzt, insbesondere ist dieses symmetrisch zur Längsachse ausgeführt. Beide Flügel weisen entlang ihrer Flügelachsen jeweils zwei Längsenden auf. Eines der Längsenden ist jeweils ein Lagerende. Die Flügel sind mit ihren jeweiligen Lagerenden klappbar am Klapplager gelagert. Das Klapplager bewirkt also die entsprechende Klapp-Funktionalität. In einem eingeklappten Zustand, auch Packzustand, sind die Flügel mit ihren Flügelachsen längs der Längsachse ausgerichtet. Insbesondere verlaufen die Flügelachsen parallel zur Längsachse oder sind gegenüber dieser nur um wenige Grad, insbesondere kleiner 3° oder kleiner 5° oder kleiner 10° verdreht. In einem ausgeklappten Zustand, auch Flugzustand, sind die Flügelachsen schräg oder quer zur Längsachse ausgerichtet. Das Klapplager ist am Bug des Luftfahrzeuges angeordnet. "Schräg" bedeutet dabei einen Winkel von größer Null Grad und kleiner 90 °, insbesondere mindestens 10° oder mindestens 20° oder mindestens 30° zwischen Flügelachse und Längsachse. "Quer" bedeutet Winkel im Bereich von 90°, insbesondere genau 90° oder 88° bis 92° oder 85° bis 95° oder 80° bis 100°.

Die Anordnung "am Bug" ist dabei so zu verstehen, dass das Klapplager den Bug bzw. die Bugspitze des Luftfahrzeuges bildet oder für alle möglichen Klappzustände ein Abstand von der Bugspitze des Luftfahrzeugs bis zum Beginn des Klapplagers höchstens 20%, insbesondere höchstens 15%, insbesondere höchstens 10%, insbesondere höchstens 5% der Längsausdehnung des gesamten Luftfahrzeuges beträgt.

Das Klapplager ist insbesondere ein Schwenklager, das eine gemeinsame Schwenkachse für beide Flügel oder zwei getrennte Schwenkachsen für je einen Flügel aufweist. Die Schwenkachsen verlaufen insbesondere parallel zueinander und insbesondere wenigstens eine davon parallel zur Gierachse des Luftfahrzeuges. Das Luftfahrzeug ist optional passiv als Segelflugzeug oder mit einer Antriebsvorrichtung ausgeführt. Die Antriebsvorrichtung ist dabei insbesondere an einem oder beiden Flügeln oder an einem sonstigen Strukturteil des Luftfahrzeuges angeordnet.

Durch die Anordnung des Klapplagers am Bug des Luftfahrzeugs kann Folgendes erreicht werden: Der Klapp-Ort, also z.B. Dreh-, Schwenk- oder Gelenkpunkt für die Klapp-, Schwenk-, Drehbewegung usw. der Flügel liegt ebenfalls am Bug. Bei einer gegebenen Gesamtlänge des Luftfahrzeuges im Packzustand können die Flügel sich daher von diesem Klapplager aus über die Gesamtlänge erstrecken und so selbst entlang ihrer Flügelachse die Gesamtlänge aufweisen. Wegen der vergleichsweise großen Flügellänge kann im Flugzustand so eine möglichst große Flügelstreckung bzw. Spannweite des Luftfahrzeugs erreicht werden, selbst wenn es sich bei dem Klapplager um ein Drehlager handelt und die Flügel an sich starr, also ohne weitere Klappgelenke oder Ähnliches ausgeführt sind. Bei beim Flugzustand quer abstehenden Flügeln handelt es sich hierbei dann um etwa die doppelte Gesamtlänge als Spannweite des Luftfahrzeuges. So sind besonders gute Auftriebseigenschaften für das Luftfahrzeug erreichbar, was dessen Reichweite steigert.

In einer bevorzugten Ausführungsform sind die Flügel im Packzustand so geklappt, dass bei einer gegebenen Geometrie des Luftfahrzeuges und einer gegebenen Klappkinetik (Bewegungsbahn des Klappmechanismus, Drehmechanismus etc.) eine kleinstmögliche Querausdehnung für das Luftfahrzeug erreicht ist. Mit anderen Worten wird aus möglichen Klapp-, Schwenk-, Drehpositionen usw., die bei einer bestimmten Klappkinetik oder einer bestimmten Position einer Schwenkachse möglich wären, eine solche gewählt, die ein kleinstmögliches Packmaß des Luftfahrzeuges bezüglich dessen Querausdehnung (zwei Dimensionen quer zur Längsachse) ermöglicht. Die entsprechenden Überlegungen werden insbesondere während einer Entwurfsphase des Luftfahrzeuges durchgeführt. Eine entsprechende Klapp- oder Drehposition kann dann in der konkreten Ausführung des Luftfahrzeuges auch als Endposition für eine Klapp-, Dreh- oder sonstige Bewegung gewählt werden. Die im Entwurfsschritt theoretisch möglichen weiteren Klapp-, Dreh- oder sonstigen Positionen müssen dann im konkreten Luftfahrzeug nicht mehr erreichbar sein.

Durch eine entsprechend kleinstmögliche Querausdehnung bzw. Packmaß kann das Luftfahrzeug dann in einer möglichst kleinen Aufnahmevorrichtung bzw. einem derartigen Stauraum untergebracht werden. Bei dieser Aufnahmevorrichtung bzw. Stauraum kann es sich zum Beispiel um einen internen Waffenschacht oder einen Frachtraum eines Trägers handeln. Der Träger, auch "Trägerfahrzeug" genannt, kann insbesondere ein Land-, Luft- oder Seefahrzeug, besonders bevorzugt ebenfalls ein Luftfahrzeug, also ein "Träger-Luftfahrzeug" sein. Anders betrachtet, kann bei gegebenem Stauraum ein - insbesondere im Flugzustand - möglichst großes Luftfahrzeug bzw. ein solches mit möglichst großer Spannweite verstaut werden, da dieses in seinem Packzustand aufgrund der kleinstmöglichen Querausdehnung einen im Vergleich zum Flugzustand reduzierten Platzbedarf aufweist.

In einer bevorzugten Ausführungsform ist das Klapplager ein von der Längsachse durchsetztes Verbindungsstück für die Flügel. Die Flügel sind also über das Klapplager aneinander gelagert bzw. klappbar befestigt. Insbesondere sind beide Flügel getrennt am Klapplager jeweils für sich klappbar gelagert, insbesondere über zwei Drehlager, so dass das Klapplager ein Doppel-Drehlager darstellt. So ergibt sich eine besonders einfache Ausführungsform des Luftfahrzeuges.

In einer bevorzugten Ausführungsform enthält das Luftfahrzeug eine am Verbindungsstück angeordnete Antriebsvorrichtung. Die Antriebsvorrichtung ist damit zentral im Luftfahrzeug, und eben nicht an den Flügeln angeordnet. So muss diese insbesondere bei Klappvorgängen der Flügel nicht mitgeklappt werden. Die Antriebsvorrichtung kann ein beliebiger Luftfahrtantrieb, insbesondere ein Flugmotor, z.B. mit Propeller, oder ein Strahltriebwerk, sein.

Das Luftfahrzeug ist dazu eingerichtet, Nutzlast innerhalb der Flügel oder an den Flügeln aufzunehmen, insbesondere nur innerhalb. Wie oben erläutert, sind dank der bugseitigen Anordnung des Klapplagers vergleichsweise große Flügel bei gegebenem Packmaß des Luftfahrzeuges im Packzustand möglich. Somit sind die Flügel für Nutzlast vorgesehen und sonstige Strukturteile des Luftfahrzeuges, z.B. ein Rumpf, können somit kleiner ausgeführt werden oder entfallen. Dies senkt den Luftwiderstand des Luftfahrzeuges und steigert damit dessen Reichweite.

In einer bevorzugten Variante dieser Ausführungsform ist die Nutzlast insbesondere eine Sensorik und/oder ein Gefechtskopf und/oder eine Steuervorrichtung und/oder eine Kommunikationsvorrichtung und/oder ein Treibstoff für die etwaige Antriebsvorrichtung. Durch entsprechende Nutzlasten kann ein besonders vielseitiges Luftfahrzeug geschaffen werden.

In einer bevorzugten Variante dieser Ausführungsform ist als Nutzlast eine Radarvorrichtung in mindestens einem der Flügel angeordnet. Die Radarvorrichtung ist insbesondere eine SAR-Vorrichtung (synthetic aperture radar), die insbesondere auf beide Flügel aufgeteilt ist. Insbesondere weist diese eine Scanrichtung in Flugrichtung und/oder zum Boden hin auf. So ist das Luftfahrzeug mit einer besonders leistungsfähigen Radararchitektur ausgerüstet.

Das Luftfahrzeug ist rumpflos oder anders ausgedrückt rumpffrei ausgeführt. Das Luftfahrzeug besteht daher im Wesentlichen nur aus den Flügeln und dem Klapplager, ggf. als Verbindungsstück, ggf. noch einer Antriebsvorrichtung, die sämtlich im vorliegenden Sinne nicht zu einem "Rumpf" zählen. Das Klapplager kann vorzugsweise zugleich als Verbindungsstück für die Flügel dienen, alternativ kann ein gesondertes Verbindungsstück vorgesehen sein. Als "Rumpf" wird ein herkömmlicher Hohlkörper zur Aufnahme von Strukturteilen (z.B. Flügelkasten) und Einbauten (z.B. Treibstofftank, Gefechtskopf, Kommunikation, ...) verstanden. Insbesondere eignet sich diese Ausführungsform, bei welcher das Luftfahrzeug mit den beiden Flügeln und dem Klapplager rumpffrei ausgebildet ist und optional noch eine Antriebsvorrichtung umfassen kann, zur Kombination mit der Aufnahme von Nutzlast in den Flügeln. Durch einen quasi völligen Verzicht auf einen entsprechenden Rumpf oder, anders ausgedrückt, die rumpffreie Ausgestaltung, wird die Aerodynamik des Luftfahrzeuges in Bezug auf dessen Reichweite weiter verbessert.

In einer weiteren Ausführungsform ist die Längsausdehnung des Luftfahrzeugs mit dem Ausklappen der Flügel minimierbar. In einer bevorzugten Ausführungsform, in welcher das Luftfahrzeug -abgesehen von einem etwaigen gesonderten Verbindungsstück und abgesehen von einer optionalen Antriebsvorrichtung am Klapplager oder Verbindungsstück - aus den Flügeln und dem Klapplager besteht, ist die Längsausdehnung des Luftfahrzeuges mit dem Ausklappen der Flügel minimierbar. Insbesondere durch die Anordnung des Klapplagers am Bug und damit auch des Dreh-, Schwenk- oder Gelenkpunkts für die Flügel ist beim Übergang vom Packzustand in den Flugzustand die Längsausdehnung des Luftfahrzeugs reduzierbar. In dem Fall, dass das Luftfahrzeug neben dem Klapplager über ein gesondertes Verbindungsstück und/oder eine an dem Klapplager oder dem Verbindungsstück angeordnete Antriebsvorrichtung verfügt, wird die Minimierung der Längsausdehnung des Luftfahrzeugs beim Übergang vom Packzustand in den Flugzustand dadurch sichergestellt, dass sich die Gesamtlänge des Luftfahrzeugs im Packzustand vom Bug bis zu den Längsenden der Flügel erstreckt oder anders ausgedrückt, die Länge der Flügel im Packzustand / eingeklappten Zustand größer als die Längsausdehnung des Verbindungsstücks und/oder der Antriebsvorrichtung ist bzw. der Heckbereich des Luftfahrzeugs durch die Längsenden der Flügel gebildet ist. Besonders bevorzugt ist die Länge der Flügel entlang ihrer Flügelachse mindestens 1,5 x, insbesondere mindestens 2 x so lang wie Länge des Verbindungsstücks und/oder der Länge der Antriebsvorrichtung bezogen auf die Längsachse des Luftfahrzeugs.

In einer bevorzugten Ausführungsform weisen die Flügel im Flugzustand eine Pfeilung auf. Die Pfeilung besteht insbesondere darin, dass die Flügelachsen mit der Längsachse einen Winkel zwischen 35° und 75°, insbesondere zwischen 40° und 65°, insbesondere zwischen 45° und 60° aufweisen. Durch eine entsprechende Pfeilung verlängert sich in Flugrichtung das Querschnittsprofil der Flügel gegenüber einer Queranordnung der Flügel, so dass - insbesondere für eine großräumige Unterbringung von Nutzlast im Flügel - eine größere Bauraumhöhe im Flügel bei zunehmender Pfeilung bei gleich bleibenden Flugeigenschaften, nämlich gleichbleibendem Profilquerschnitt in Flugrichtung möglich ist.

Alternativ können die Flügel im Flugzustand auch quer zur Längsachse verlaufen, die Flügelachsen also zusammenfallen und mit der Längsachse einen Winkel von 90° (siehe hierzu oben die möglichen Winkelbereiche) bilden. So wird eine maximale Flügelstreckung bzw. Spannweite des Luftfahrzeuges bei gegebener Flügellänge erreicht.

In einer bevorzugten Ausführungsform enthält das Luftfahrzeug eine von außerhalb des Luftfahrzeuges betreibbare bzw. antreibbare Aktiviervorrichtung. Die Aktiviervorrichtung dient als Aufklappvorrichtung. Sie ist dazu eingerichtet, bei ihrer Betätigung bzw. ihrem Betrieb die Flügel vom Packzustand in den Flugzustand zu verbringen, diese also aufzuklappen und damit die endgültige Flugbereitschaft des Luftfahrzeuges zu aktivieren. Die Aktiviervorrichtung ist also bezüglich des Luftfahrzeuges antriebslos bzw. passiv ausgeführt. Für die Betätigung der Aktiviervorrichtung wird also Energie von außerhalb des Luftfahrzeuges, z.B. von einem das Luftfahrzeug ausbringenden Träger, zugeführt. Somit muss im Luftfahrzeug keinerlei Antrieb oder Ähnliches für die Bewegung der Flügel in den Flugzustand vorgesehen werden, was das Luftfahrzeug einfach und leicht macht und so dessen Reichweite steigert.

In einer bevorzugten Variante dieser Ausführungsform enthält die Aktiviervorrichtung ein zumindest im Betrieb der Aktiviervorrichtung in Flugrichtung vom Luftfahrzeug weg führendes Zugmittel, insbesondere ein Zugseil. Insbesondere ist das Zugmittel dabei vom Rest der Aktiviervorrichtung lösbar ausgebildet. "In Flugrichtung" ist dabei als "nach vorne gerichtet" zu verstehen, so dass zumindest eine Richtungskomponente in Flugrichtung weist, also das Zugmittel zumindest nicht quer vom Luftfahrzeug wegführt. Eine derartige Richtung des Zugmittels erlaubt einen Schleppbetrieb des Luftfahrzeuges in der Luft, z.B. einen Schleppbetrieb durch einen Träger. Die Aktiviervorrichtung ist dazu eingerichtet, bei Zug (also Krafteinwirkung) an ihrem Zugmittel in Flugrichtung den Zug auf den Klappmechanismus und/oder die Flügel zu übertragen, insbesondere rein mechanisch umzulenken, so dass die Flügel vom Packzustand in den Flugzustand verbracht oder, anders ausgedrückt, aufgeklappt werden. Eine entsprechende Vorrichtung ist besonders einfach und - unter Nutzung des Luftwiderstandes des Luftfahrzeuges im Betrieb - antriebslos umsetzbar. So kann insbesondere das Luftfahrzeug im Packzustand aus einem Träger, z.B. heckseitig, insbesondere aus einem im Heckbereich des befindlichen Waffenschachts oder Stauraums ausgeworfen werden, um mittels eines Zugmittels zunächst von diesem durch die Luft geschleppt zu werden. Das Zugmittel bleibt dazu mit dem Träger verbunden. Durch den Schleppvorgang erfährt das Luftfahrzeug Luftwiderstand relativ zum Träger, wodurch Zug am Zugmittel entsteht. Der Zug am Zugmittel wird dann innerhalb des Luftfahrzeuges in die restliche Aktiviervorrichtung, z.B. einen Klappmechanismus des Klapplagers und/oder die Flügel eingeleitet, um die Flügel vom Packzustand in den Flugzustand zu verbringen. Sobald der Flugzustand erreicht ist, kann das Zugmittel insbesondere vom Luftfahrzeug und damit von der restlichen Aktiviervorrichtung gelöst werden und das Luftfahrzeug seinen eigenen Flug beginnen.

In einer bevorzugten Ausführungsform ist das Luftfahrzeug ein autonomes Luftfahrzeug, z.B. ein "Remote Carrier", eines ("zukünftigen") vernetzten Luftkampfsystems, z.B. eines "FCAS" (Future Combat Air System). Das Luftfahrzeug ist insbesondere ein Flugkörper, ein Marschflugkörper, eine Drohne usw. Dank der hier vorgeschlagenen Lösung können besonders leistungsfähige autonome Luftfahrzeuge als Remote Carrier geschaffen werden, die bei geringen Packmaßen vergleichsweise gute Flugeigenschaften bzw. Reichweiten aufweisen. So entsteht insgesamt ein besonders leistungsfähiges vernetztes Luftkampfsystem (FCAS).

In einer bevorzugten Ausführungsform ist das Luftfahrzeug dazu eingerichtet, im Packzustand in einer Aufnahmevorrichtung, insbesondere einem Waffenschacht und/oder einer Außenstation und/oder einem Laderaum und/oder einem Stauraum eines Trägers verstaubar oder anbringbar zu sein. Insbesondere sind bekannte geometrische und sonstige Anforderungen an das Luftfahrzeug erfüllt, die sich aus der Aufnahmevorrichtung, z.B. dem Waffenschacht und/oder Außenstation und/oder Laderaum und/oder Stauraum ergeben, für den das Luftfahrzeug bestimmungsgemäß vorgesehen ist. "Bestimmungsgemäß" heißt dabei, dass das Luftfahrzeug auf eine bestimmte oder einen bestimmten Typ von Aufnahmevorrichtung wie Waffenschacht, Außenstation, usw. konstruktiv abgestimmt ist und für den Einsatz dort vorgesehen ist; z.B. für die dadurch bestimmten Geometrieanforderungen usw. ausgelegt ist. Insbesondere ist so die Schaffung von Trägern möglich, die entsprechende Waffenschächte etc. aufweisen und mit den hier vorgeschlagenen Luftfahrzeugen ausrüstbar sind.

Die Aufgabe der Erfindung wird auch gelöst durch ein Flugsystem gemäß Patentanspruch 9 mit einem erfindungsgemäßen Luftfahrzeug. Das Flugsystem umfasst weiterhin einen Träger (insbesondere Land-, Luft- oder Seefahrzeug) mit einer Aufnahmevorrichtung, insbesondere einem Waffenschacht und/oder einer Außenstation und/oder einem Laderaum und/oder Stauraum, in oder an dem das Luftfahrzeug im Packzustand verstaut oder verstaubar ist. Das Luftfahrzeug ist außerdem vom Träger aus der Aufnahmevorrichtung absetzbar.

Das Flugsystem und zumindest ein Teil dessen Ausführungsformen sowie die jeweiligen Vorteile wurden sinngemäß bereits im Zusammenhang mit dem erfindungsgemäßen Luftfahrzeug erläutert.

Die Aufgabe der Erfindung wird auch gelöst durch ein Verfahren gemäß Patentanspruch 10 zum Ausbringen eines Luftfahrzeuges, das die Merkmale des Anspruches 7 aufweist, aus einem Träger, hier einem Träger-Luftfahrzeug. Das Verfahren geht dabei davon aus, dass das Luftfahrzeug im oder am Träger im Packzustand verstaut ist, z.B. in der o.g. Aufnahmevorrichtung etc. und dass sich das Träger-Luftfahrzeug im Flug befindet und sich in einer Flugrichtung bewegt.

Bei dem Verfahren wird zunächst das Luftfahrzeug vom Träger gelöst, wobei das Zugmittel am Träger gehalten wird, insbesondere mit einem vom Luftfahrzeug abgewandten Ende an diesem befestigt ist. Aufgrund des Luftwiderstandes, dem das ausgeworfene bzw. abgesetzte Luftfahrzeug nun am Zugmittel hängend ausgesetzt ist, geht das Luftfahrzeug nun in einen Schleppzustand über, wird also vom Träger durch die Luft geschleppt. Insbesondere ist es dabei möglich, durch Verlängerung der Länge des Zugmittels, z.B. Nachlassen eines Zugseils aus dem Träger, den Abstand des Luftfahrzeuges vom Träger zu vergrößern, z.B. bis ein stabiler Schleppzustand erreicht ist. Das Luftfahrzeug wird dabei durch seinen Luftwiderstand abgebremst, weshalb am Zugmittel eine Zugkraft entsteht.

Anschließend werden die Flügel des am Zugmittel geschleppten Luftfahrzeugs durch den vom Luftwiderstand des Luftfahrzeuges verursachten Zug am Zugmittel aus dem Packzustand in den Flugzustand ausgeklappt, wie oben erläutert. Die vom Zugmittel am Luftfahrzeug angreifende Zugkraft wird also innerhalb des Luftfahrzeuges bzw. der (restlichen) Aktiviervorrichtung bzw. einer Klappvorrichtung umgelenkt bzw. genutzt, um eine Kraft und/oder ein Drehmoment zu erzeugen, das die Flügel aus dem Packzustand in den Flugzustand verbringt. Gegebenenfalls ist hierzu eine optionale Verriegelung am Luftfahrzeug zu lösen, die die Flügel so lange im Packzustand hält, bis ein Übergang in den Flugzustand gewünscht ist.

Zuletzt wird das Zugmittel vom Luftfahrzeug gelöst oder eingeholt. Insbesondere wird das Zugmittel vom Luftfahrzeug und / oder vom Träger abgeworfen und / oder vom Träger eingezogen. Das Zugmittel könnte zwar auch am Luftfahrzeug verbleiben und insbesondere von diesem eingeholt werden, was jedoch in Form eines unnützen Ballasts eher unerwünscht sein sollte. Bei einem Einsatz in Friedenszeiten ist jedoch das Einziehen des Zugmittels zu bevorzugen.

Die hier vorgeschlagene Lösung beruht auf folgenden Erkenntnissen, Beobachtungen bzw. Überlegungen und weist noch die nachfolgenden Ausführungsformen auf. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Der hier vorgeschlagenen Lösung liegen folgende Überlegungen zugrunde: Es soll ein autonomes Luftfahrzeug (Remote Carrier) für ein (vernetztes) Luftkampfsystem, insbesondere FCAS-System, entwickelt werden. Dabei sollen hohe Reichweiten erzielt werden und gleichzeitig eine flexible Verbringung mit einem Träger, insbesondere einem dem (zukünftigen) Luftkampfsystem bzw. FCAS angehörenden Mehrzweckkampfflugzeug der sechsten Generation oder anderen Kampfflugzeugen oder Transportflugzeugen möglich sein. Daraus resultieren besondere Forderungen aufgrund des vorhandenen Raumes in der Aufnahmevorrichtung, z.B. im Waffenschacht, Außenstation und Laderaum von Träger-Luftfahrzeugen.

Bisherige Luftfahrzeuge (LFZ) oder Flugkörper (FK) sind in klassischer Rumpf-FlügelKonfiguration gebaut, z.B. die oben genannten "Taurus KEPD-350" oder "BGM-109 Tomahawk". Dabei verfügen sie entweder nur über sehr kleine Ruder und Finnen und nutzen zu einem Großteil auch den Rumpf als Auftriebskörper. Sollen höhere Reichweiten erzielt werden, finden konventionelle Klapp- oder Scherenflügel Verwendung, die in der Packkonfiguration vollständig oder teilweise im Rumpf versenkt sind.

Die hier vorgeschlagene Lösung beruht unter anderem auf folgender Idee: Anstatt die Nutzlast (Sensorik, Gefechtskopf) und den Treibstoff in einem Rumpfteil unterzubringen, werden die Flügel als tragende Struktur, bzw. als Bauraum genutzt. Dabei kann beispielsweise besonders vorteilhaft ein SAR (synthetic aperture radar) untergebracht werden, wobei die Scanrichtung insbesondere die Flugrichtung ist.

Eine weitere Idee der hier vorgeschlagenen Lösung ist folgende: Durch das Entfallen eines Rumpfes kann ein Klapp-, Schwenk- oder sonstiger Mechanismus für die Klappung, Schwenkung usw. der Flügel so gestaltet werden, dass die Flügelstreckung maximiert wird. Eine Pfeilung der Flügel ermöglicht dabei die Wahl eines relativ dicken Flügelprofils, da im aerodynamischen Schnitt (in Flugrichtung) die Profildicke geringer ist als bei einem Schnitt quer zur Erstreckungsrichtung der Flügel (Flügelachse).

Die hier vorgeschlagene Lösung beruht auch noch auf folgender Erkenntnis: Für die Realisierung der hohen Reichweite ist eine möglichst große Flügelstreckung und eine geringe Strukturmasse vorteilhaft. Durch eine Konstruktion ohne Rumpfanteil kann einerseits das Strukturgewicht gering gehalten werden und andererseits werden die nicht-aerodynamischen Luftfahrzeug-Teile minimiert, zusätzlich wird die Oberfläche minimiert, was zu einem geringeren Widerstand führt. In der rumpflosen Konfiguration kann der Flügeldrehpunkt (Klapplager / Klappmechanismus) außerdem sehr weit vorne (im eingeklappten Zustand) angebracht werden, da mit dem Aufklappen die Längsausdehnung minimiert wird. Bei einer konventionellen Rumpf-Flügelkonfiguration steht meist nur etwa die Hälfte des LFZ/FK als Flügellänge zur Verfügung, da gewährleistet sein muss, dass der aerodynamische Druckpunkt nach wie vor hinter dem Schwerpunkt liegt.

Der durch diese Konfiguration eingesparte Bauraum ist besonders wichtig bei einer vorübergehenden Unterbringung des LFZ für Transportzwecke in einem Transport-LFZ (Träger) mit internen Waffenschächten, in denen nur begrenzter Stauraum zur Verfügung steht.

Ebenso vorteilhaft ist die günstige Ausbringung aus der Hecksektion eines Transport-LFZ (Träger). Dabei kann beispielsweise das Luftfahrzeug im eingeklappten Zustand (Packzustand) an einem Drahtseil (Zugmittel) hinter dem Transport-LFZ hergezogen werden und wird dann nur aufgrund des aerodynamischen Widerstands und einem entsprechenden Mechanismus (Aktiviervorrichtung) aufgeklappt. Ein "starres" Luftfahrzeug, also mit nicht-klappbaren Flügeln, könnte effizient nur quer zur Flugrichtung in einem Laderaum eines Transport-LFZ verstaut werden, was den Abgang vom Transport-LFZ sehr schwer macht. Eine Stabilisierung eines derart ausgeworfenen Luftfahrzeuges wäre schwierig, wenn nicht unmöglich.

Weitere Merkmale, Wirkungen und Vorteile der Erfindung ergeben sich aus der nachfolgenden Beschreibung eines bevorzugten Ausführungsbeispiels der Erfindung sowie aus den beigefügten Figuren. Dabei zeigen, jeweils in einer schematischen Prinzipskizze:
- Figur 1: eine a) Draufsicht und eine b) Heckansicht eines - Luftfahrzeugs gemäß eines Ausführungsbeispiels der Erfindung im Packzustand, sowie c) eine Draufsicht auf das Luftfahrzeug im Flugzustand und d) Schnitte durch die Flügel des Luftfahrzeugs in verschiedenen Richtungen,
- Figur 2: einen Vergleich zwischen einem a) Luftfahrzeug gemäß eines Ausführungsbeispiels der Erfindung und b) einem Luftfahrzeug gemäß Stand der Technik im Packzustand,
- Figur 3: einen Vergleich gemäß Figur 2 im Flugzustand,
- Figur 4: das Luftfahrzeug aus Figur 1c mit Radarsensor,
- Figur 5: das Ausbringen eines Luftfahrzeuges aus einem Transport-Luftfahrzeug a) im Packzustand in Seitenansicht und b) Draufsicht und c) beim Übergang in den Flugzustand.

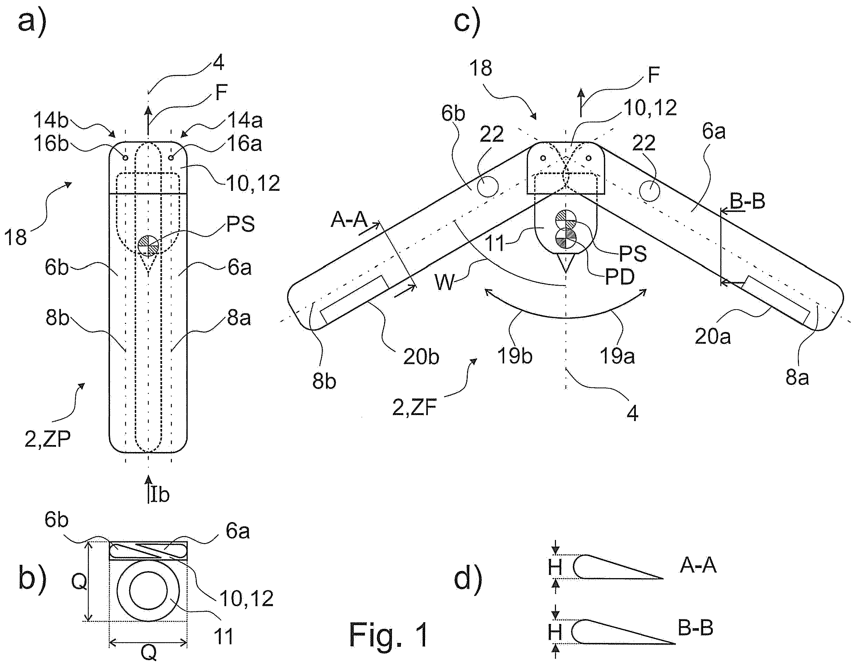

Figur 1 zeigt ein Luftfahrzeug 2, das eine Längsachse 4 aufweist, die im Betrieb, das heißt im Flug des Luftfahrzeuges 2, dessen Rollachse und dessen Flugrichtung F (angedeutet durch einen Pfeil) entspricht. Das Luftfahrzeug 2 enthält zwei Flügel 6a, b, die sich entlang einer jeweiligen Flügelachse 8a, b erstrecken. Das Luftfahrzeug 2 enthält weiterhin ein Klapplager 10, hier in Form eines von der Längsachse 4 durchsetzten Verbindungsstücks 12 für die beiden Flügel 6a, b. Die beiden Flügel 6a, b weisen in Richtung der Flügelachse 8a, b ein jeweiliges Lagerende 14a, b auf und sind dort am Klapplager 10 jeweils klappbar gelagert. Im Beispiel besteht die Klappbewegung aus einer reinen Drehbewegung um eine jeweilige Drehachse 16a, b, die hier senkrecht zur Längsachse 4 und Flügelachse 8a, b und parallel zu einer Gierachse des Luftfahrzeuges 2 verläuft. Am Klapplager 10 und hier an der Unterseite des Luftfahrzeuges 2 ist eine Antriebsvorrichtung 11 des Luftfahrzeuges 2, hier ein Strahltriebwerk, befestigt.

Figur 1a (Draufsicht auf das Luftfahrzeug 2 in Richtung der Gierachse) und Figur 1b (Heckansicht in Richtung des Pfeils Ib des Luftfahrzeuges 2 in Flugrichtung F) zeigen den Packzustand ZP des Luftfahrzeuges 2, in dem die Flügelachsen 8a, b längs der, hier parallel zur, Längsachse 4 ausgerichtet sind. Das Klapplager 10 ist am Bug 18 des Luftfahrzeuges 2 angeordnet, im Beispiel weist das Klapplager 10 keinen Abstand zum Bug 18 auf, sondern das Klapplager 10 sowie die Lagerenden 14a, b bilden den Bug 18 des Luftfahrzeuges 2.

Figur 1c zeigt den Flugzustand ZF des Luftfahrzeuges 2. Im Gegensatz zum Packzustand ZP sind die Flügel 6a, b in Richtung der Pfeile 19a,b dank des Klapplagers 10 ausgeklappt, hier um die Drehachsen 16a, b gedreht. Die Flügelachsen 8a, b verlaufen nun schräg zur Längsachse 4 und schließen mit dieser einen spitzen Winkel W von im Ausführungsbeispiel 60° ein.

Zu seiner Steuerung weist das Luftfahrzeug 2 an den Flügeln 6a, b nicht näher erläuterte Ruderflächen 20a, b auf.

Den Figuren 1a und 1c ist zu entnehmen, wie sich beim Übergang von dem Packzustand ZP in den Flugzustand ZF der Schwerpunkt PS in Richtung zum Bug 18 hin verschiebt. Der aerodynamische Druckpunkt PD liegt im Flugzustand ZF in Flugrichtung F gesehen hinter dem Schwerpunkt PS.

Figur 1d zeigt zwei Schnitte durch die (identisch bzw. symmetrisch ausgeführten Flügel 6a, b. Schnitt A-A verläuft quer bzw. senkrecht zur Flügelachse 8a, b, Schnitt B-B verläuft im Flugzustand ZF parallel zur Längsachse 4 und bildet somit den wirksamen aerodynamischen Querschnitt im Flug des Luftfahrzeuges 2. Zu erkennen ist hier, wie durch die Pfeilung der Flügel 6a, b die Wahl eines relativ dicken Flügelprofils (Höhe H) möglich ist, und dennoch im aerodynamischen Schnitt B-B die Profildicke geringer ist, da das effektive Profil gegenüber dem Querschnitt A-A verlängert ist. Durch die Höhe H steht ausreichend Bauraum innerhalb der Flügel 6a, b für hier nur angedeutete Nutzlast 22 zur Verfügung. Im Beispiel ist die Nutzlast 22 Sensorik, ein Gefechtskopf, eine Steuervorrichtung zur Bedienung der Ruderflächen 20a, b und der Antriebsvorrichtung 11 sowie eine Kommunikationsvorrichtung zur Kommunikation mit beispielsweise einem Kampfflugzeug oder einem Träger, von dem das Luftfahrzeug 2 ausgesetzt wurde. Das Luftfahrzeug 2 kann als autonomes Luftfahrzeug (LFZ) und insbesondere als Bestandteil eines vernetzten Luftkampfsystems ausgeführt sein.

Bei der gegebenen Geometrie des Luftfahrzeuges 2, hier dem in Draufsicht etwa rechteckigen Klapplager 10, sowie den in Draufsicht ebenfalls etwa rechteckigen Flügeln 6a, b sowie der gegebenen Klappkinetik, hier der reinen Drehung um die Drehachsen 16a, b, führt die parallele Anordnung der Flügelachsen 8a,b zur Längsachse 4 im Packzustand zu einer kleinstmöglichen Querausdehnung Q (in jeder Richtung quer zur Längsachse 4). Mit anderen Worten würde jeder andere Drehwinkel der Flügel 6a, b um die Drehachsen 16a,b zu einer größeren Querausdehnung Q führen.

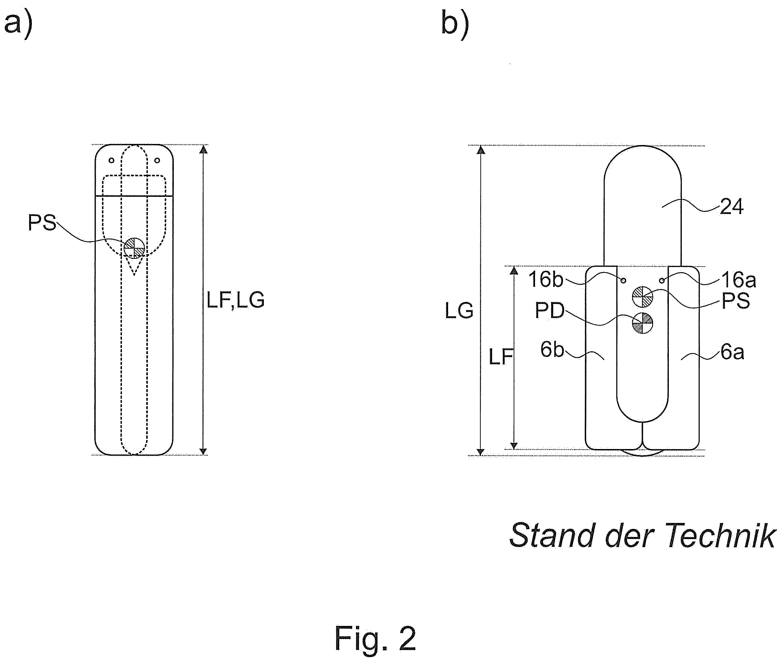

Figur 2a zeigt nochmals gemäß Figur 1a das nach einem Ausführungsbeispiel der Erfindung ausgestaltete Luftfahrzeug 2 im Packzustand ZP. Zum Vergleich zeigt Figur 2b ein konventionelles bzw. herkömmliches Luftfahrzeug gemäß Stand der Technik, bei dem ein entsprechendes Klapplager 10 nicht am Bug 18, sondern entlang der Längsachse 4 etwa mittig im Luftfahrzeug 2 angeordnet ist. Gezeigt ist damit eine konventionelle Klappflügelkonstruktion. Bei gleicher Gesamtlänge LG ist daher die Flügellänge LF eines Luftfahrzeugs gemäß Stand der Technik deutlich kürzer als die Flügellänge gemäß des nach einem Ausführungsbeispiel der Erfindung ausgestalteten Luftfahrzeugs 2, nämlich nur etwa 2/3 so lang. Gemäß der der Ausgestaltung nach der Erfindung sind Gesamtlänge LG und Flügellänge LF gleich oder anders ausgedrückt:
Die Gesamtlänge LG bestimmt sich über die Flügellänge im eingeklappten Zustand der Flügel. Im Gegensatz zu einer erfindungsgemäßen Ausgestaltung des Luftfahrzeug 2, welches rumpffrei, abgesehen von der etwaig vorhandenen Antriebsvorrichtung 11, ausgebildet ist, verfügt das Luftfahrzeug gemäß Stand der Technik über einen Rumpf 24, in dem die Nutzlast untergebracht ist. Die Flügel 6a, b des Luftfahrzeugs gemäß Stand der Technik tragen keinerlei Nutzlast.

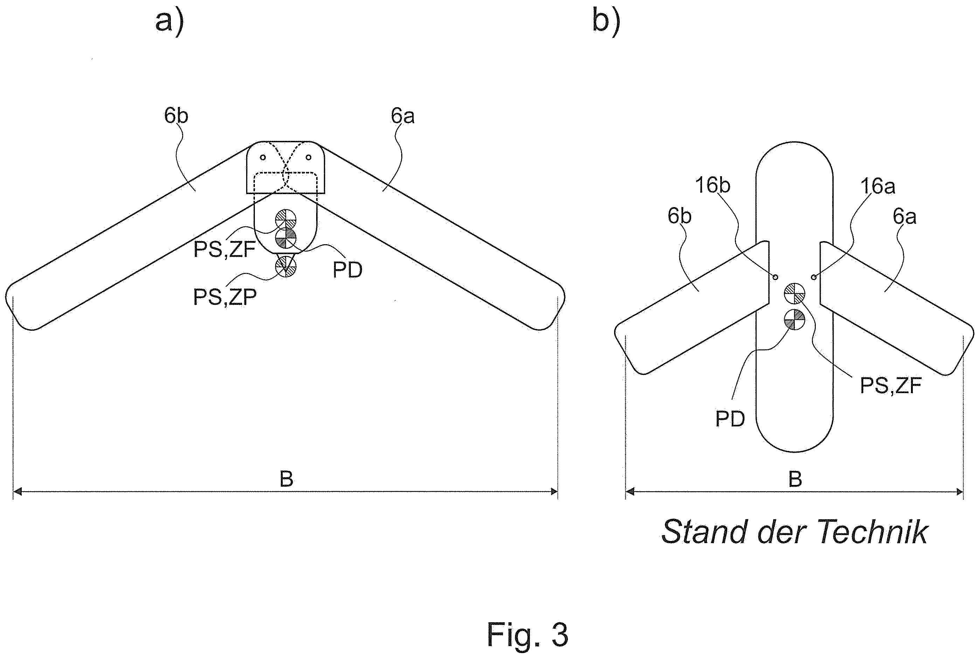

Figur 3 zeigt gemäß Figur 2 den Vergleich zwischen dem Luftfahrzeug 2 nach einem Ausführungsbeispiel der Erfindung und demjenigen gemäß Stand der Technik, nun jedoch im Flugzustand ZF. In Figur 3a ist nochmals zur Verdeutlichung die Wanderung des Schwerpunktes PS des Luftfahrzeuges 2 zwischen Packzustand ZP und Flugzustand ZF dargestellt. Verdeutlicht ist in Figur 3 insbesondere, wie bei gleicher Pfeilung und gleicher Gesamtlänge LG der Luftfahrzeuge 2 im Packzustand ZP (siehe Figur 2), eine deutlich größere Flügelstreckung, also Spannweite bzw. Breite B des Luftfahrzeuges 2 nach einem Ausführungsbeispiel der Erfindung im Flugzustand ZF als im Vergleich zum Luftfahrzeug gemäß Stand der Technik erreicht ist.

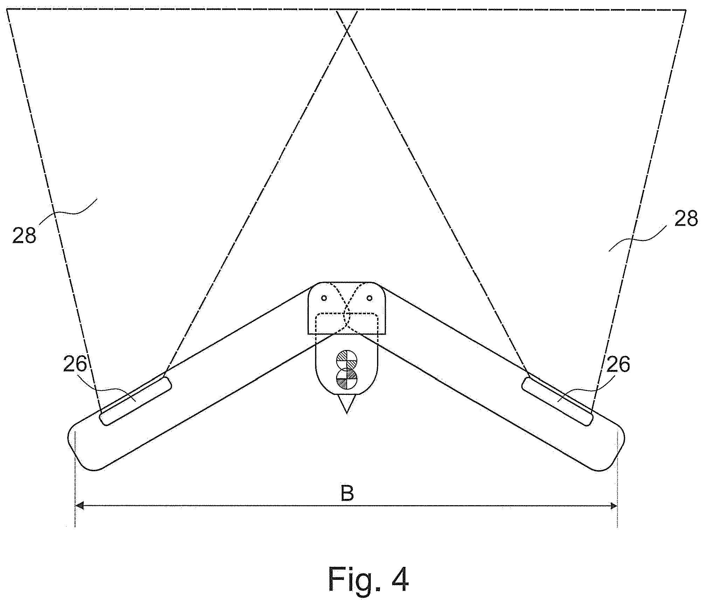

Figur 4 zeigt explizit die Integration von Nutzlast 22 in Form einer Radarvorrichtung 26, in die beiden Flügel 6a, b. Die Radarvorrichtung 26 enthält hier insbesondere zwei Sensoren, hier je einen Radarsensor (SAR) in je einem der Flügel 6a, b. Im Beispiel ist ein Scanbereich 28 der Sensoren 26 in Flugrichtung F des Luftfahrzeuges 2 ausgerichtet. Gezeigt ist also ein Beispiel für eine Sensorintegration.

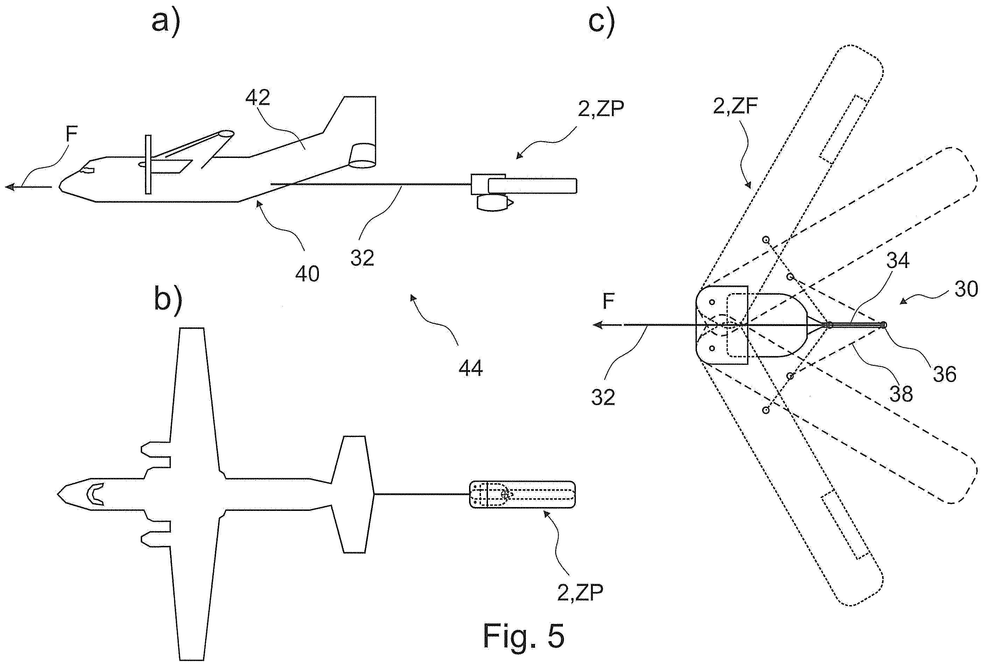

Figur 5c zeigt eine Ausführungsform der Erfindung, bei der das Luftfahrzeug 2 eine Aktiviervorrichtung 30 enthält. Diese dient bei ihrer Betätigung dazu, das Luftfahrzeug 2 bzw. dessen Flügel 6a, b aus dem Packzustand ZP in den Flugzustand ZF zu verbringen. Die Aktiviervorrichtung 30 enthält ein Zugmittel 32, hier ein Zugseil bzw. Schleppseil, welches vom Luftfahrzeug 2 in Flugrichtung wegführt bzw. zu einem Träger 42 (siehe Figuren 5a, b) hin durchgeführt ist. Die (restliche, ohne das Zugmittel 32) Aktiviervorrichtung 30 ist dank einer Mechanik mit einer Linearführung 34 und einem Aufspannmechanismus in der Lage, einen Zug an ihrem Zugmittel 32 in Flugrichtung F auf die Flügel 6a, b umzulenken, um diese in den Flugzustand ZF zu verbringen. Ohne dies im Detail zu erläutern, greift hierbei das Zugmittel 32 an einem in der Linearführung 34 geführten Gelenkpunkt 36 an und treibt dadurch zwei Gelenksstangen 38 an, die zwischen Gelenkpunkt 36 und einem Anlenkpunkt an den Flügeln 6a, b befestigt sind.

Die Figuren 5a, b zeigen in Seitenansicht und Draufsicht, wie zunächst das Luftfahrzeug 2 aus Fig. 5c aus einer lediglich angedeuteten Aufnahmevorrichtung 40 eines Trägers 42 in den freien Luftraum ausgebracht wird. Der Träger 42 ist hier ein Transportluftfahrzeug, die Aufnahmevorrichtung 40 dessen Frachtraum, in dem das Luftfahrzeug 2 im Packzustand transportiert wird. Nach Öffnen einer nicht näher dargestellten Ladeluke wird das Luftfahrzeug 2 entgegen der Flugrichtung F aus dem Frachtraum ausgestoßen, wobei es am Zugmittel 32 in Form des Schleppseils nach wie vor am Träger 42 gehalten wird. Durch den Luftwiderstand bzw. eine Widerstandskraft, den das Luftfahrzeug 2 entgegen der Flugrichtung F im dargestellten Schleppzustand erfährt, wird Zug in Richtung der Flugrichtung F am Zugmittel 32 erzeugt. Denn das Zugmittel 32 wird vom Träger mit einer Haltekraft gehalten. Gemäß Figur 5c wird durch den Zug bzw. die Zugkraft das Luftfahrzeug 2 aus dem Packzustand ZP in den Flugzustand ZF überführt, indem die Flügel 6a, b wie oben beschrieben dank der Aktiviervorrichtung 30 ausgeklappt werden. Nachdem der Übergang in den Flugzustand ZF erfolgt ist, wird das Zugmittel 32 vom Luftfahrzeug 2, hier vom Gelenkpunkt 36, gelöst und beispielsweise vom Träger 42 wieder eingeholt oder abgeworfen, sodass das Luftfahrzeug 2 seinen eigentlichen Einsatz beginnen kann.

Das Luftfahrzeug 2 und der Träger 42 bilden damit ein Flugsystem 44.

### Bezugszeichenliste

- 2: Luftfahrzeug
- 4: Längsachse
- 6a, b: Flügel
- 8a, b: Flügelachse
- 10: Klapplager
- 11: Antriebsvorrichtung
- 12: Verbindungsstück
- 14a, b: Lagerende
- 16a, b: Drehachse
- 18: Bug
- 19a, b: Pfeil
- 20a, b: Ruderfläche
- 22: Nutzlast
- 24: Rumpf
- 26: Radarvorrichtung
- 28: Scanbereich
- 30: Aktiviervorrichtung
- 32: Zugmittel
- 34: Linearführung
- 36: Gelenkpunkt
- 38: Gelenksstange
- 40: Aufnahmevorrichtung
- 42: Träger
- 44: Flugsystem

- F: Flugrichtung
- ZP: Packzustand
- ZF: Flugzustand
- PS: Schwerpunkt
- PD: aerodynamischer Druckpunkt
- W: Winkel
- H: Höhe
- LG: Gesamtlänge
- LF: Flügellänge
- B: Breite
- Q: Querausdehnung

## Patentansprüche

1. Luftfahrzeug (2), das eine Längsachse (4) aufweist, mit zwei Flügeln (6a, b), die sich entlang einer jeweiligen Flügelachse (8a, b) erstrecken, mit einem an der Längsachse (4) angeordneten Klapplager (10), an dem die Flügel (6a, b) mit einem jeweiligen Lagerende (14a, b) klappbar gelagert sind, wobei die Flügel (6a, b) in einem eingeklappten Packzustand (ZP) mit ihren Flügelachsen (8a, b) längs der Längsachse (4) ausgerichtet sind und in einem ausgeklappten Flugzustand (ZF) mit ihren Flügelachsen (8a, b) schräg oder quer zur Längsachse (4) ausgerichtet sind, wobei das Klapplager (10) am Bug (18) des Luftfahrzeuges (2) angeordnet ist, wobei das Luftfahrzeug (2) dazu eingerichtet ist, Nutzlast (22) innerhalb oder an den Flügeln (6a, b) aufzunehmen,
**dadurch gekennzeichnet, dass** das Luftfahrzeug (2) rumpffrei ausgeführt ist und im Wesentlichen nur aus den Flügeln und dem Klapplager, ggf. als Verbindungsstück, ggf. noch einer Antriebsvorrichtung, besteht.

2. Luftfahrzeug (2) nach Anspruch 1,
**dadurch gekennzeichnet, dass**
das Klapplager (10) ein von der Längsachse (4) durchsetztes Verbindungsstück (12) für die Flügel (6a, b) ist.

3. Luftfahrzeug (2) nach Anspruch 2,
**dadurch gekennzeichnet, dass**
das Luftfahrzeug (2) eine am Verbindungsstück (12) angeordnete Antriebsvorrichtung (11) enthält.

4. Luftfahrzeug (2) nach einem der vorhergehenden Ansprüche,
**dadurch gekennzeichnet, dass**
die Nutzlast (22) eine Sensorik und/oder ein Gefechtskopf und/oder eine Steuervorrichtung und/oder eine Kommunikationsvorrichtung und/oder ein Treibstoff ist.

5. Luftfahrzeug (2) nach einem der vorhergehenden Ansprüche,
**dadurch gekennzeichnet, dass**
als Nutzlast (22) eine Radarvorrichtung in mindestens einem der Flügel (6a, b) angeordnet ist.

6. Luftfahrzeug (2) nach einem der vorhergehenden Ansprüche,
**dadurch gekennzeichnet, dass**
die Flügel (6a, b) im Flugzustand (ZF) eine Pfeilung aufweisen.

7. Luftfahrzeug (2) nach einem der vorhergehenden Ansprüche,
**dadurch gekennzeichnet, dass**
das Luftfahrzeug (2) eine antriebslos ausgeführte Aktiviervorrichtung (30) enthält, die dazu eingerichtet ist, bei deren Betätigung die Flügel (6a, b) vom Packzustand (ZP) in den Flugzustand (ZF) zu verbringen, wobei für die Betätigung der Aktiviervorrichtung (30) Energie von außerhalb des Luftfahrzeuges (2) zuführbar ist.

8. Luftfahrzeug (2) nach Anspruch 7,
**dadurch gekennzeichnet, dass**
die Aktiviervorrichtung (30) ein beim Betrieb in Flugrichtung (F) vom Luftfahrzeug (2) weg führendes Zugmittel (32) enthält, und die Aktiviervorrichtung (30) dazu eingerichtet ist, bei Zug an ihrem Zugmittel (32) in Flugrichtung (F) den Zug auf das Klapplager (10) und/oder die Flügel (6a, b) zu übertragen, um diese vom Packzustand (ZP) in den Flugzustand (ZF) zu verbringen.

9. Flugsystem (44), umfassend ein Luftfahrzeug (2) nach einem der vorhergehenden Ansprüche und einen Träger (42) mit einer Aufnahmevorrichtung (40), in oder an der das Luftfahrzeug (2) im Packzustand (ZP) verstaubar ist und von diesem absetzbar ist.

10. Verfahren zum Ausbringen eines Luftfahrzeuges (2), das die Merkmale des Anspruches 7 aufweist, aus einem sich in einer Flugrichtung (F) bewegenden Träger (42), wobei das Luftfahrzeug (2) im oder am Träger (42) im Packzustand (ZP) verstaut ist, bei dem:
- das Luftfahrzeug (2) vom Träger (42) gelöst wird, wobei das Zugmittel (32) am Träger (42) gehalten wird,
- das Luftfahrzeug (2) aufgrund des Luftwiderstandes in einen Schleppzustand übergeht,
- die Flügel (6a, b) des am Zugmittel (32) geschleppten Luftfahrzeugs (2) durch den vom Luftwiderstand des Luftfahrzeuges (2) verursachten Zug am Zugmittel (32) aus dem Packzustand (ZP) in den Flugzustand (ZF) ausgeklappt werden,
- das Zugmittel (32) vom Luftfahrzeug (2) gelöst oder eingeholt wird.

## Claims

1. Aircraft (2) having a longitudinal axis (4), with two wings (6a, b) extending along a respective wing axis (8a, b), with a hinged bearing (10) arranged on the longitudinal axis (4), on which the wings (6a, b) are mounted in a hinged manner by way of a respective bearing end (14a, b), wherein, in a folded-in packed state (ZP), the wings (6a, b) are oriented with their wing axes (8a, b) along the longitudinal axis (4) and, in an extended flight state (ZF), are oriented with their wing axes (8a, b) at an angle or transversely with respect to the longitudinal axis (4), wherein the hinged bearing (10) is arranged at the nose (18) of the aircraft (2), wherein the aircraft (2) is designed to carry payload (22) inside or on the wings (6a, b),
**characterized in that** the aircraft (2) is configured without a fuselage and consists substantially only of the wings and the hinged bearing, optionally as a connecting piece, and optionally also a drive device.

2. Aircraft (2) according to Claim 1,
**characterized in that**
the hinged bearing (10) is a connecting piece (12) for the wings (6a, b) which is passed through by the longitudinal axis (4).

3. Aircraft (2) according to Claim 2,
**characterized in that**
the aircraft (2) comprises a drive device (11) arranged on the connecting piece (12).

4. Aircraft (2) according to one of the preceding claims,
**characterized in that**
the payload (22) is a sensor system and/or a warhead and/or a control device and/or a communications device and/or a fuel.

5. Aircraft (2) according to one of the preceding claims,
**characterized in that**
a radar device is arranged in at least one of the wings (6a, b) as the payload (22).

6. Aircraft (2) according to one of the preceding claims,
**characterized in that**
the wings (6a, b) have a swept position in the flight state (ZF).

7. Aircraft (2) according to one of the preceding claims,
**characterized in that**
the aircraft (2) comprises a non-powered activation device (30) which is designed to move the wings (6a, b) from the packed state (ZP) into the flight state (ZF) when actuated, wherein energy can be supplied from outside the aircraft (2) for the actuation of the activation device (30).

8. Aircraft (2) according to Claim 7,
**characterized in that**
the activation device (30) comprises a traction mechanism (32) leading away from the aircraft (2) during operation in the direction of flight (F), and the activation device (30) is designed, in the case of a tensile load on its traction mechanism (32) in the direction of flight (F), to transfer the tensile load to the hinged bearing (10) and/or the wings (6a, b), in order to transfer them from the packed state (ZP) into the flight state (ZF).

9. Flight system (44), comprising an aircraft (2) according to one of the preceding claims and a carrier (42) with a receiving device (40), in or on which the aircraft (2) can be stowed in the packed state (ZP) and can be removed from it.

10. Method for deploying an aircraft (2) comprising the features of Claim 7 from a carrier (42) moving in a direction of flight (F), wherein the aircraft (2) is stowed in or on the carrier (42) in the packed state (ZP), in the case of which method:
- the aircraft (2) is detached from the carrier (42), wherein the traction mechanism (32) is held on the carrier (42),
- the aircraft (2) becomes towed due to the air resistance,
- the wings (6a, b) of the aircraft (2) towed on the traction mechanism (32) are folded out from the packed state (ZP) into the flight state (ZF) by way of the tensile load on the traction mechanism (32) caused by the air resistance of the aircraft (2),
- the traction mechanism (32) is released or gathered up by the aircraft (2).

## Revendications

1. Aéronef (2), présentant un axe longitudinal (4), comprenant deux ailes (6a, b) qui s'étendent le long d'un axe d'aile (8a, b) respectif, un palier de repliement (10) disposé sur l'axe longitudinal (4) et sur lequel les ailes (6a, b) sont montées de manière repliable par une extrémité de palier (14a, b) respective, dans lequel, dans un état de rangement replié (ZP), les ailes (6a, b) sont alignées par leurs axes d'aile (8a, b) le long de l'axe longitudinal (4), et dans un état de vol déplié (ZF), sont alignées par leurs axes d'aile (8a, b) en biais ou transversalement à l'axe longitudinal (4), dans lequel le palier de repliement (10) est disposé sur le nez (18) de l'aéronef (2), dans lequel l'aéronef (2) est conçu pour recevoir une charge utile (22) à l'intérieur ou au niveau des ailes (6a, b),
**caractérisé en ce que** l'aéronef (2) est réalisé sans fuselage et n'est substantiellement composé que des ailes et du palier de repliement, le cas échéant en tant que pièce de liaison, le cas échéant encore d'un dispositif d'entraînement.

2. Aéronef (2) selon la revendication 1,
**caractérisé en ce que**
le palier de repliement (10) est une pièce de liaison (12), traversée par l'axe longitudinal (4), pour les ailes (6a, b).

3. Aéronef (2) selon la revendication 2,
**caractérisé en ce que**
l'aéronef (2) comporte un dispositif d'entraînement (11) disposé au niveau de la pièce de liaison (12).

4. Aéronef (2) selon l'une quelconque des revendications précédentes,
**caractérisé en ce que**
la charge utile (22) est un système de capteurs et/ou une ogive et/ou un dispositif de commande et/ou un dispositif de communication et/ou du kérosène.

5. Aéronef (2) selon l'une quelconque des revendications précédentes,
**caractérisé en ce que**
comme charge utile (22), un dispositif radar est disposé dans au moins l'une des ailes (6a, b).

6. Aéronef (2) selon l'une quelconque des revendications précédentes,
**caractérisé en ce que**
les ailes (6a, b) présentent une flèche d'aile à l'état de vol (ZF).

7. Aéronef (2) selon l'une quelconque des revendications précédentes,
**caractérisé en ce que**
l'aéronef (2) comporte un dispositif d'activation (30) réalisé sans entraînement qui est conçu, lorsqu'il est actionné, pour faire passer les ailes (6a, b) de l'état de rangement (ZP) à l'état de vol (ZF), dans lequel de l'énergie provenant de l'extérieur de l'aéronef (2) peut être amenée pour actionner le dispositif d'activation (30).

8. Aéronef (2) selon la revendication 7,
**caractérisé en ce que**
le dispositif d'activation (30) comporte un moyen de traction (32) s'éloignant de l'aéronef (2) dans le sens du vol (F) en cours de fonctionnement, et le dispositif d'activation (30) est conçu, en cas de traction sur son moyen de traction (32) dans le sens du vol (F), pour transférer la traction au palier de repliement (10) et/ou aux ailes (6a, b) afin de les faire passer de l'état de rangement (ZP) à l'état de vol (ZF).

9. Système de vol (44), comprenant un aéronef (2) selon l'une quelconque des revendications précédentes et un support (42) pourvu d'un dispositif de réception (40) dans ou au niveau duquel l'aéronef (2) peut être escamoté à l'état de rangement (ZP) et peut être retiré de celui-ci.

10. Procédé permettant de déployer un aéronef (2) qui présente les particularités de la revendication 7 à partir d'un support (42) se déplaçant dans un sens de vol (F), l'aéronef (2) étant escamoté dans ou au niveau du support (42) à l'état de rangement (ZP), dans lequel :
- l'aéronef (2) est détaché du support (42), le moyen de traction (32) étant retenu au niveau du support (42),
- l'aéronef (2) passe à un état de remorquage en raison de la résistance à l'air,
- les ailes (6a, b) de l'aéronef (2) remorqué par le moyen de traction (32) sont dépliées par la traction sur le moyen de traction (32), provoquée par la résistance à l'air de l'aéronef (2), de l'état de rangement (ZP) à l'état de vol (ZF),
- le moyen de traction (32) est détaché de l'aéronef (2) ou rentré dans celui-ci.
